# FASCICULE DE BREVET EUROPEEN

(11) **EP 2 296 238 B1**
(45) Date de publication et mention de la délivrance du brevet: **23.12.2015**
(21) Numéro de dépôt: 10290458.8
(22) Date de dépôt: 26.08.2010
(51) Int. Cl.: H02B 1/46

(54) **Boîte pour appareillages électriques**
Gehäuse für elektrische Geräte
Box for electrical switchgear

(30) Priorité: 14.09.2009 FR 0904367
(43) Date de publication de la demande: 16.03.2011
(73) Titulaire: Legrand France, 87000 Limoges (FR); Legrand SNC, 87000 Limoges (FR)
(72) Inventeur: Auvray, Christophe, 87240 Saint Sylvestre (FR); Lambert, Clément, 87000 Limoges (FR)
(74) Mandataire: Orsini, Fabienne

(56) Documents cités:
- EP-A1- 1 403 990
- EP-A1- 1 835 587
- EP-A2- 1 582 656
- WO-A1-2009/097844

## Description

### DOMAINE TECHNIQUE AUQUEL SE RAPPORTE L'INVENTION

La présente invention concerne de manière générale une boîte pour appareillages électriques comportant un fond et quatre parois latérales s'élevant perpendiculairement à ce fond, dont au moins une paroi latérale comportant une pluralité de lignes de plus faible résistance autorisant une cassure de la paroi latérale le long de deux de ces premières lignes et le retrait d'une portion amovible de ladite paroi latérale située entre ces deux lignes.

### ARRIÈRE-PLAN TECHNOLOGIQUE

On connaît déjà, notamment du document EP1835587, une telle boîte pour appareillages électriques, dans laquelle les deux lignes de plus faible résistance, situées chacune à proximité d'un coin de la boîte, donnent à l'utilisateur la possibilité de retirer pratiquement entièrement l'une des parois latérales de la boîte. En retirant de la même manière la paroi latérale d'une autre boîte identique, l'utilisateur peut ainsi placer en vis-à-vis les ouvertures de mêmes longueurs aménagées dans lesdites boîtes afin de les associer pour former une boîte de plus grande contenance tout en préservant les qualités d'isolation et d'étanchéité à la poussière et aux particules de ces boîtes.

L'inconvénient principal d'une telle boîte est qu'elle ne peut pas être associée à une boîte du même type mais de longueur et donc de capacité différente.

On connaît également du document EP1403990 une boîte pour appareillages électriques conforme au préambule de la revendication 1.

### OBJET DE L'INVENTION

Un but de la présente invention est de permettre l'association de boîtes de tailles différentes ou l'association de plusieurs boîtes de dimensions réduites le long d'une même paroi latérale d'une autre boîte de plus grandes dimensions.

A cet effet, on propose selon l'invention une boîte pour appareillages électriques telle que décrite dans la revendication 1.

Ainsi la paroi latérale correspondante peut être cassée de deux manières différentes, soit le long de deux lignes de plus faible résistance successives, de manière à ouvrir une fenêtre de dimensions réduites à l'un ou l'autre de deux endroits différents sur la paroi latérale, soit le long des deux lignes de plus faible résistance les plus éloignées, de manière à ouvrir une fenêtre de plus grandes dimensions dans la paroi latérale.

Une telle fenêtre peut être ainsi ouverte au droit de chaque rangée d'appareillages électriques, de manière à faciliter l'association de deux boîtes entre elles.

Ceci autorise l'association de boîtes de tailles différentes ou de plusieurs boîtes le long d'une même paroi latérale d'une autre boîte. L'association des différentes boîtes se fait de manière aisée et celles-ci offrent une grande souplesse d'utilisation.

D'autres caractéristiques avantageuses et non limitatives de la boîte selon l'invention sont énoncées dans les revendications 2 à 9.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue schématique en perspective de trois boîtes selon l'invention associées entre elles ;
- la figure 2 est une vue en perspective d'une paroi latérale d'une premières des trois boîtes de la figure 1 avant son association avec les deux autres ;
- la figure 3 est une vue de détail de la figure 2 ;
- la figure 4 est une vue de détail de la première boîte de la figure 1, représentée en l'absence des deux autres boîtes, qui montre une étape de l'association de la première boîte avec l'une des deux autres boîtes ;
- la figure 5 est une vue de détail de la figure 4 ;
- les figures 6, 7 et 8 sont des vue schématiques montrant des étapes successives de l'association de la première boîte avec l'une des deux autres boîtes postérieures à l'étape montrée sur la figure 4 ; et,
- la figure 9 est une vue de détail des deux autres boîtes de la figure 1, en l'absence de la première boîte.

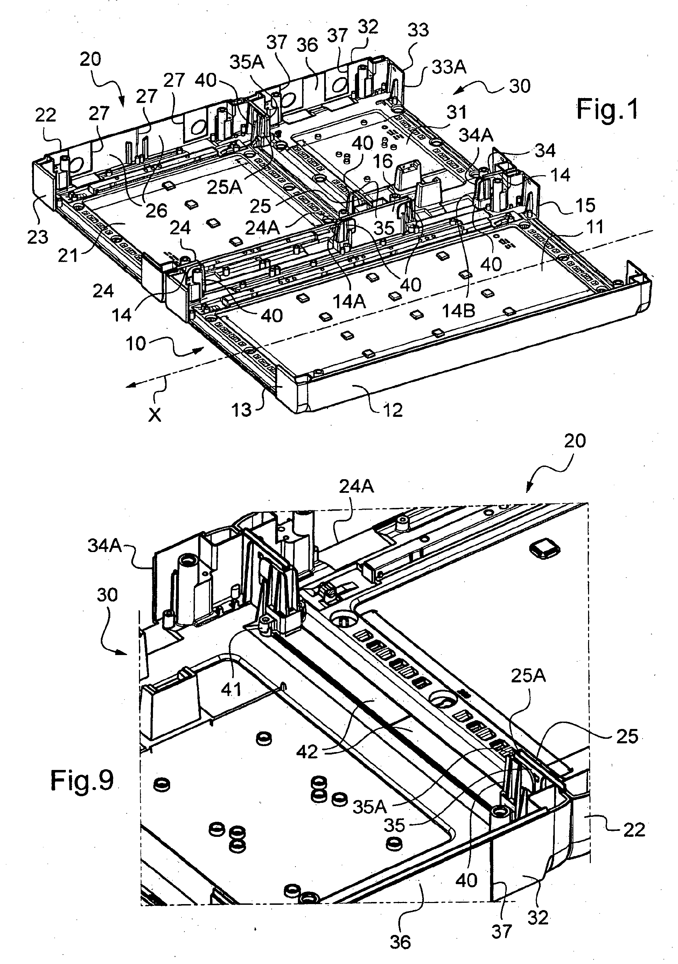

On a représenté sur la figure 1 trois boîtes 10, 20, 30 conforme à l'invention.

Chacune de ces boîtes 10, 20, 30 comporte un fond 11, 21, 31 présentant une forme rectangulaire ou carré et quatre parois latérales 12, 13, 14, 15, 22, 23, 24, 25, 32, 33, 34, 35 qui s'élèvent à partir de ce fond 11, 21, 31, perpendiculairement à celui-ci, le long de chacun de ses côtés. Elles sont réalisées en matériau isolant, par exemple en matière plastique.

De manière remarquable, chacune des boîtes 10, 20, 30 selon l'invention comporte au moins une paroi latérale 13, 14, 15, 22, 23, 24, 25, 33, 35 comprenant au moins trois lignes 17, 27, 37 de plus faible résistance autorisant une cassure de cette paroi latérale 13, 14, 15, 22, 23, 24, 25, 33, 35 le long d'un couple quelconque de ces lignes 17 de plus faible résistance.

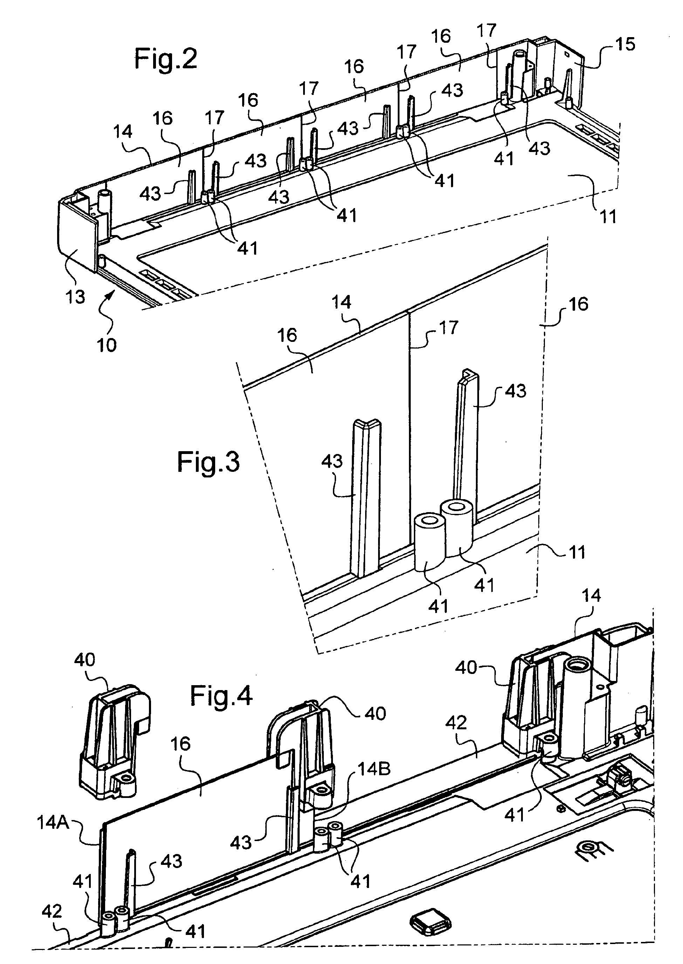

Les lignes 17 de plus faible résistance sont représentées par exemple sur la figure 2 qui montre la paroi latérale 14 d'une première des trois boîtes 10, 20, 30, appelée boîte principale 10, avant cassure de cette paroi le long de ces lignes 17. Cette paroi 14 de la boîte principale 10 comporte cinq lignes 17 de plus faible résistance. Les parois latérales 22, 23, 24, 25 de la deuxième boîte 20 et les parois latérales 33, 35 de la troisième boîte 30 représentées sur la figure 1 comporte chacune trois lignes 27, 37 de plus faible résistance.

Ainsi, les parois latérales 13, 14, 15, 22, 23, 24, 25, 33, 35 concernées peuvent être cassées le long de deux lignes 17, 27, 37 successives de manière à autoriser le retrait, à plusieurs endroits différents de la paroi concernée, d'une portion amovible 16, 26, 36 de cette paroi, dont la longueur est égale à l'intervalle entre les deux lignes 17 successives.

Ce retrait permet d'ouvrir par exemple une fenêtre 14B dans la paroi latérale 14.

Les parois latérales 13, 14, 15, 22, 23, 24, 25, 33, 35 concernées peuvent également être cassées le long de deux lignes 17, 27, 37 plus éloignées de manière à autoriser le retrait d'une plus grande portion de cette paroi.

Ce retrait permet d'ouvrir par exemple une fenêtre 14A, 24A, 25A, 35A de plus grande dimensions que la fenêtre 14B dans la paroi latérale 14, 24, 25, 35.

Chacune de ces lignes 17, 27, 37 de plus faible résistance s'étend perpendiculairement au fond 11, 21, 31 de la boîte 10, 20, 30, depuis ce fond jusqu'au bord libre de la paroi latérale correspondante.

Chaque lignes 17, 27, 37 de plus faible résistance correspond par exemple à une zone de la paroi latérale 13, 14, 15, 22, 23, 24, 25, 33, 35 présentant une épaisseur inférieure à l'épaisseur du reste de cette paroi. Ainsi, la résistance mécanique de la paroi est plus faible le long de cette ligne, et la paroi se casse facilement le long de cette ligne.

Cette zone d'épaisseur inférieure à l'épaisseur du reste de la paroi latérale est par exemple réalisée par un amincissement local de cette paroi lors de son moulage.

Le fond 11, 21, 31 de chaque boîte 10, 20, 30 comporte également des lignes de plus faible résistance qui courent le long des parois latérales 13, 14, 15, 22, 23, 24, 25, 33, 35, entre les lignes 17, 27, 37 de plus faible résistance de ces parois latérales.

La boîte 10, 20 selon l'invention est adaptée à loger un nombre de rangées d'appareillages électriques modulaires supérieur au égal à deux.

Les rangées d'appareillages modulaires sont alors montées sur autant de rails de support qui s'étendent perpendiculairement à deux parois latérales 12, 14, 22, 24 opposées de cette boîte 10, 20, appelées dans la suite parois latérales longitudinales 12, 14, 22, 24.

La boîte 10, 20 selon l'invention comporte alors, sur au moins une de ces deux parois latérales longitudinales 12, 14, 22, 24, un nombre de lignes 17, 27 de plus faible résistance égal au nombre de rangées d'appareillages électriques plus un.

La boîte principale 10 est ici adaptée à loger quatre rangées d'appareillages modulaires (non représentés) et présente une forme rectangulaire allongée d'axe longitudinal X.

Comme décrit précédemment, la paroi latérale longitudinale 14 de la boîte principale 10 comporte cinq lignes 17 de plus faible résistance.

Comme représenté sur la figure 2, les cinq lignes 17 de plus faible résistance de la paroi latérale longitudinale 14 délimitent quatre portions amovibles 16 de cette paroi.

Les cinq lignes 17 de plus faible résistance de la paroi latérale longitudinale 14 sont espacées ici d'un pas régulier égal à 150 millimètres, et placées de sorte que chacune des quatre portions amovibles 16 de cette paroi se situe en vis-à-vis de l'extrémité d'une des quatre rangée d'appareillages électriques logées dans la boîte principale 10.

Le nombre et le positionnement des lignes 17 de plus faible résistance facilitent ainsi le raccordement électrique des appareillages électriques montés sur les rails de support des deux boîtes associées.

La présence de ces cinq lignes 17 de plus faible résistance dans la paroi latérale longitudinal 14 autorise la cassure de cette paroi le long de n'importe quel couple de deux lignes 17 de plus faible résistance, et le retrait d'une ou plusieurs portions amovibles 16 de cette paroi.

Dans l'exemple représenté sur la figure 1, deux fenêtres 14A, 14B sont ouvertes dans la paroi latérale longitudinale 14 par le retrait de trois portions amovibles 16 : la première fenêtre 14A est obtenue par le retrait de deux portions amovibles 16 et mesure ainsi deux fois le pas d'espacement des lignes 17 de plus faible résistance, soit ici 300 millimètres, tandis de la deuxième fenêtre 14B est obtenue par le retrait d'une portion amovible 16 et mesure ainsi une fois le pas d'espacement des lignes 17 de plus faible résistance, soit ici 150 millimètres.

Ces deux fenêtres 14A, 14B sont séparées par une portion amovible 16 de la paroi latérale longitudinale 14 qui reste solidaire du fond 11 de la boîte principale 10.

Cependant, il est également possible grâce à la boîte selon l'invention d'ouvrir dans la paroi latérale longitudinale 14 de la boîte principale 10 une seule fenêtre de largeur égale à une fois, deux fois, trois fois ou quatre fois le pas d'espacement des lignes 17 de plus faible résistance, soit ici 150, 300, 450 ou 600 millimètres, et de placer les fenêtre de taille inférieure à 600 millimètres à différents endroits sur la paroi latérale longitudinale 14.

La boîte secondaire 20 est adaptée à loger deux rangées d'appareillages électriques. Elle comporte ici dans chacune de ses parois latérales 22, 23, 24, 25 trois lignes 27 de plus faible résistance. Ces trois lignes 27 sont visibles sur la paroi latérale 22 de la boîte secondaire 20 de la figure 1. Comme le montre la figure 1, le retrait des deux portions amovibles de la paroi latérale 24 de la boîte secondaire 20 adjacente à la boîte principale 10 créée une ouverture 24A de mêmes dimensions que l'ouverture 14A de la paroi latérale longitudinale 14 de la boîte principale 10.

La boîte tertiaire 30 est adaptée à loger une seule rangée d'appareillage électrique. Elle comporte ici dans deux de ses parois latérales 33, 35 trois lignes 37 de plus faible résistance et dans les deux autres parois latérales 32, 34 deux lignes 37 de plus faible résistance. Comme le montre la figure 1, le retrait d'une portion amovible 36 de la paroi latérale 34 adjacente à la boîte principale 10 ouvre une fenêtre 34A de mêmes dimensions que la fenêtre 14B de la paroi latérale longitudinale 14 de la boîte principale 10, ce qui permet d'associer les boîtes principale 10 et tertiaire 30.

En outre, le retrait de deux portions amovibles 26, 36 des parois latérales 25, 35 adjacentes des boîtes secondaires 20 et tertiaires 30 ouvre les fenêtres 25A, 35A de même dimensions dans ces deux parois et autorise l'association de ces deux boîtes, comme représenté sur la figure 9.

Pour sécuriser l'association de chaque couple de boîtes, et garantir les propriétés d'étanchéité et d'isolation de l'association de ces trois boîtes 10, 20, 30, il est prévu au moins un cavalier 40 et au moins une languette 42 souple représentés notamment sur les figures 4 à 9, qui coopèrent respectivement avec les bords coupés des parois latérales 14, 24, 34, 25, 35 de chaque couple de boîtes et avec les bords coupés des fonds 11, 21, 31 de ces couples de boîtes.

Le nombre de cavaliers 40 et de languettes 42 utilisés dépend du nombre de fenêtres ouvertes dans les parois latérales des boîtes et de la longueur de ces fenêtres.

Il est prévu de préférence deux cavaliers 40 pour chaque couple de fenêtres mises en vis-à-vis pour l'association de deux boîtes et un nombre de languettes suffisant pour couvrir toute la longueur de chacun de ses couples de fenêtres.

Ces languettes 42 et ces cavaliers 40 sont représentés par exemple sur les figures 4 à 9.

Les languettes 42 sont réalisées par exemple en plastique souple. Elles comportent dans chacune de leurs tranches longitudinales une rainure adaptée à coopérer avec le bord coupé du fond 11, 21, 31 de ladite boîte 10, 20, 30.

Chaque languette 42 présente une longueur égale au pas d'espacement des lignes 17, 27, 37 de plus faible résistance.

Chaque cavalier 40 est réalisé de préférence en plastique rigide. Il présente un profil en forme de U adapté à enserrer le bord coupé des parois latérales 14, 24, 34, 25, 35 de deux boîtes 10, 20, 30 placées côte à côte afin de les maintenir ensemble de manière étanche à la poussière et isolée électriquement.

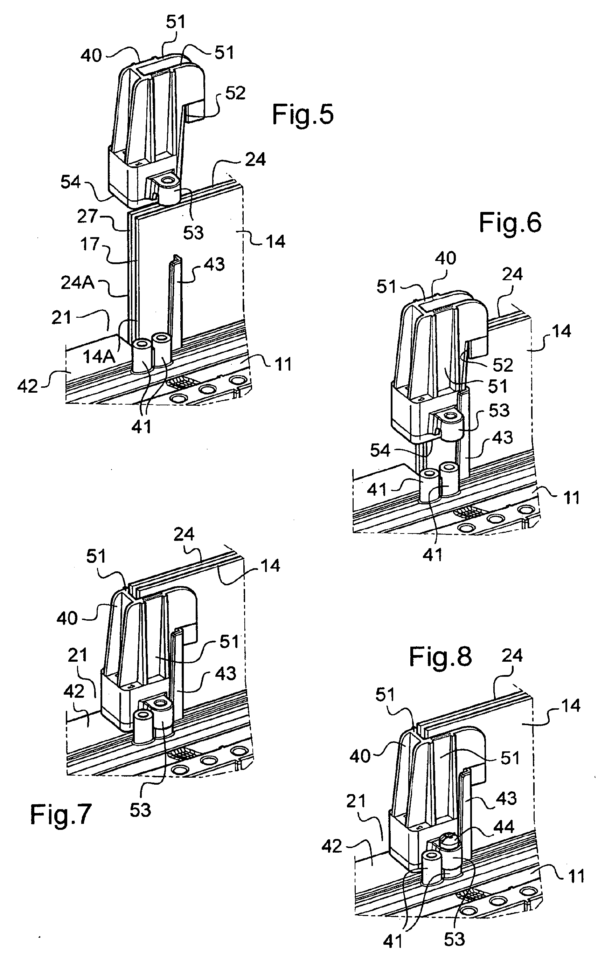

L'écartement des deux ailes latérales 51 de chaque cavalier 40 est sensiblement égal à deux fois l'épaisseur de la paroi latérale 14, 24, 34, 25, 35 des boîtes 10, 20, 30, à un jeu près permettant le montage de ce cavalier 40. Les parois latérales 14, 24, 34, 25, 35 dont les bords coupés sont insérés dans ledit cavalier 40 sont ainsi serrées l'une contre l'autre, comme représenté sur la figure 8..

La hauteur de chaque cavalier 40 est sensiblement égale à la hauteur des parois latérales 14, 24, 34, 25, 35 de chaque boîte 10, 20, 30, de sorte qu'il recouvre la majeur partie du bord coupé de chaque paroi latérale 14, 24, 34, 25, 35 (figure 8).

Chaque boîte 10, 20, 30 comporte également des moyens de positionnement 43 dudit cavalier 40 par rapport à chaque paroi latérale 14, 24, 34, 25, 35 sur laquelle il est monté.

Ces moyens de positionnement comportent, sur la face intérieure de chaque paroi latérale 14, 24, 34, 25, 35, disposé de part et d'autre de chaque ligne 17, 27, 37 de plus faible résistance de chaque boîte, deux montants 43 qui forment avec ladite paroi latérale 14, 24, 34, 25, 35 deux rainures ouvertes l'une vers l'autre, comme représenté sur la figure 3.

Chaque montant 43 fait saillie à partir de la face interne de chaque paroi latérales 14, 24, 34, 25, 35, vers l'intérieur de la boîte correspondante. Il s'étend parallèlement à la ligne 17, 27, 37 de plus faible résistance correspondante et comporte ici un retour dans la direction de cette ligne 17, 27, 37 de plus faible résistance.

Ces montants 43 s'élèvent à partir du fond de la boîte sur une partie de la hauteur de la paroi latérale 14, 24, 34, 25, 35 correspondante.

Ces moyens de positionnement comportent également, dans chaque aile latérale 51 du cavalier 40, une encoche 52 adaptée à loger l'extrémité libre d'un desdits montants 43 (figures 5 et 6).

Il est enfin prévu dans le fond 11, 21, 31 de chaque boîte 10, 20, 30, à proximité de chaque montant 43, un puits de vissage 41 d'une vis de fixation du cavalier 40 (figures 3 à 8).

En pratique, pour associer deux boîtes 10, 20, 30 le long d'une de leurs parois latérales 14, 24, 34, 25, 35, l'utilisateur casse la paroi latérale 14, 24, 34, 25, 35 de chaque boîte 10, 20, 30 pour ouvrir une fenêtre 14A, 14B, 24A, 34A, 25A, 35A de même taille dans chaque boîte 10, 20, 30.

Il retire les portions amovibles 16, 26, 36 des parois latérales 14, 24, 25, 35 correspondantes. Ce faisant, il libère l'accès à l'une des rainures formées par les montants 43 de chaque paroi latérale disposés le long des deux lignes 17, 27, 37 de plus faible résistance cassées. Les deux rainures libérées se font face de part et d'autre de la fenêtre 14A, 14B, 24A, 34A, 25A, 35A ouverte dans la paroi latérale 14, 24, 34, 25, 35 correspondante.

L'utilisateur place les fenêtres 14A, 14B, 24A, 34A, 25A, 35A ouvertes dans les parois latérales 14, 24, 25, 35 de deux boîtes en vis-à-vis, de manière à ce que les bords coupés de chaque paroi latérale 14, 24, 34, 25, 35 et de chaque fond 11, 21, 31 soient disposés parallèlement.

Dans une étape préliminaire non représentée, l'utilisateur installe les languettes 42 en insérant le bord coupé des fonds 11, 21, 31 de chaque boîte 10, 20, 30 à associer dans les rainures des tranches longitudinales des languettes 42.

Ici, chaque languette 42 présentant une longueur égale au pas d'espacement entre deux lignes 17, 27, 37 de plus faible résistance de chaque paroi latérale, l'utilisateur installe donc entre les deux boîtes à associer un nombre de languettes 42 égal au nombre de portions amovibles 16, 26, 36 retirées pour ouvrir la fenêtre correspondante.

Ces languettes 42 réalisent ainsi un raccord étanche et isolant entre les deux fonds des deux boîtes associées.

Ensuite, l'utilisateur installe les cavaliers 40.

Comme représenté sur les figures 5 à 8, l'utilisateur fait glisser le cavalier 40 sur les bords coupés des parois latérales 14, 24, 34, 25, 35 adjacentes. Le bord libre de chaque aile 51 du cavalier 40 est guidé par les rainures formées par les montants 43 dont l'accès à été libéré par le retrait des portions amovibles 16, 26, 36 correspondantes de chaque paroi latérale 14, 24, 34, 25, 35 .

Lorsque le cavalier 40 est complètement engagé sur les bords coupés des parois latérales concernées, l'extrémité libre de chaque montant 43 s'engage dans une encoche 52 de l'aile 51 correspondante du cavalier 40.

Une partie de chaque aile 51 du cavalier 40 chevauche alors l'extrémité libre du montant 43 correspondant, bloquant tout déplacement du cavalier dans le plan de la paroi latérale correspondante.

Chaque cavalier 40 comporte également des éléments de fixation 53 (figures 5 à 8) qui s'étendent en saillie à partir de chacune des ailes 51 du cavalier 40 et sont adaptées à être vissés sur le puits de vissage 41 le plus proche du montant 43 qui coopèrent avec le cavalier 40. Ici, chaque élément de fixation 53 du cavalier 40 recouvre le puits de vissage 41 correspondant et comporte en outre une ouverture traversante disposée en vis-à-vis de l'ouverture de ce puits de vissage 41 autorisant le passage d'une vis de fixation 44.

L'utilisateur visse ainsi les vis de fixation 44 dans chaque puits de vissage 41 à travers l'ouverture traversante de chaque élément de fixation 53 du cavalier 40 (figure 8).

Le cavalier 40 est alors fixé de part et d'autre à chacune des deux boîtes 10, 20, 30 à associer et maintient solidement les deux parois latérales 14, 24, 25, 34, 35 adjacentes des deux boîtes accolées.

Comme représenté sur la figure 1, un cavalier 40 est installé à chaque extrémité des couples 14A, 24A, 14B, 34A, 25A, 35A de fenêtres mises en vis-à-vis.

Comme représenté sur les figures 5 et 6, la base du cavalier 40 destinée à venir en contact avec le fond 11, 21, 31 de la boîte 10, 20, 30 comporte un décroché 54 qui accueille l'extrémité de la languette 42 reliant les fonds 11, 21, 31 correspondants des deux boîtes à associer afin que la base du cavalier 40 s'ajuste parfaitement au fond des boîtes associées.

L'installation des languettes 42 et des cavaliers 40 est ainsi facile et permet de garantir l'étanchéité à la poussière et l'isolation électrique des boîtes associées.

La présente invention n'est nullement limitée aux modes de réalisation décrits et représentés mais l'homme du métier saura y apporter toute variante conforme à son esprit.

## Revendications

1. Boîte (10, 20, 30) pour appareillages électriques comportant un fond (11, 21, 31) et quatre parois latérales (12, 13, 14, 15, 22, 23, 24, 25, 32, 33, 34, 35) s'élevant perpendiculairement à ce fond (11, 21, 31), dont au moins une paroi latérale (14, 24, 25, 35) comportant une pluralité de lignes (17; 27; 37) de plus faible résistance autorisant une cassure de la paroi latérale (14, 24, 25, 35) le long de deux lignes (17; 27; 37) quelconques parmi cette pluralité de lignes et le retrait d'une portion amovible (16, 26, 36) de ladite paroi latérale (14, 24, 25, 35) située entre ces deux lignes (17; 27; 37), **caractérisé en ce que** ladite boîte est adaptée à loger un nombre de rangée d'appareillages électriques modulaires supérieur ou égal à 2, lesdites rangées étant disposées perpendiculairement à deux parois latérales (12, 14, 22, 24) opposées de ladite boîte, et **en ce qu'**au moins l'une de ces deux parois latérales (12, 14, 22, 24) opposées comporte un nombre de lignes (17; 27) de plus faible résistance égal audit nombre de rangées plus un.

2. Boîte (10, 20, 30) selon la revendication 1, dans laquelle lesdites lignes (17; 27; 37) de plus faible résistance s'étendent depuis le fond (11, 21, 31) jusqu'au bord libre de ladite paroi latérale (14, 24, 25, 35).

3. Boîte selon l'une des revendications 1 et 2, dans laquelle lesdites lignes (17; 27; 37) de plus faible résistance sont espacées d'un pas régulier prédéterminé le long de ladite paroi latérale (14, 24, 25, 35).

4. Boîte (10, 20, 30) selon la revendication 3, dans laquelle ledit pas est égal à 150 millimètres.

5. Boîte (10, 20, 30) selon l'une des revendications 1 à 4, dans laquelle il est prévu au moins une languette (42) souple comportant dans sa tranche longitudinale une rainure adaptée à coopérer avec le bord coupé du fond (11, 21, 31) de ladite boîte (10, 20, 30), cette languette (42) souple présentant une longueur égale au pas d'espacement des lignes (17; 27; 37) de plus faible résistance.

6. Boîte (10, 20, 30) selon l'une des revendications 1 à 5, dans laquelle il est prévu au moins un cavalier (40) à profil en forme de U adapté à enserrer le bord coupé de ladite paroi latérale (14, 24, 25, 35) de deux boîtes (10, 20, 30) placées côte à côte.

7. Boîte (10, 20, 30) selon la revendication 6, dans laquelle il est prévu des moyens de positionnement (43, 43) dudit cavalier (40) par rapport à ladite paroi latérale (14, 24, 25, 35), lesdits moyens de positionnement (43, 53) comportant, sur la face intérieure de ladite paroi latérale (14, 24, 25, 35), disposés de part et d'autre de chaque ligne (17, 27, 37) de plus faible résistance, deux montants (43) qui forment avec ladite paroi latérale (14, 24, 25, 35) deux rainures ouvertes l'une vers l'autre.

8. Boîte (10, 20, 30) selon la revendication 7, dans laquelle lesdits moyens de positionnement (43, 53) comportent, dans une aile latérale (51) correspondante du cavalier (40), une encoche (53) adaptée à loger l'extrémité libre d'un desdits montants (43).

9. Boîte (10, 20, 30) selon l'une des revendications 7 et 8, dans laquelle il est prévu dans le fond (11, 21, 31) de cette boîte (10, 20, 30), à proximité de chaque montant (43), un puits de vissage (41) d'une vis de fixation (44) dudit cavalier.

## Patentansprüche

1. Installationsdose (10, 20, 30) für elektrische Geräte mit einem Boden (11, 21, 31) und vier Seitenwänden (12, 13, 14, 15, 22, 23, 24, 25, 32, 33, 34, 35), die sich senkrecht zu diesem Boden (11, 21, 31) erheben und von denen mindestens eine Seitenwand (14, 24, 25, 35) eine Vielzahl von Linien (17, 27, 37) mit geringerem mechanischen Widerstand aufweist, der ein Abbrechen der Seitenwand (14, 24, 25, 35) entlang von zwei beliebigen Linien (17, 27, 37) von dieser Vielzahl von Linien ermöglicht sowie das Entfernen eines abnehmbaren Abschnitts (16, 26, 36) dieser Seitenwand (14, 24, 25, 35), der sich zwischen diesen zwei Linien (17, 27, 37) befindet, **dadurch gekennzeichnet, dass** sich die Dose dazu eignet, eine Anzahl von Reihen modularer Elektrogeräte größer gleich 2 aufzunehmen, wobei diese Reihen senkrecht zu zwei gegenüberliegenden Seitenwänden (12, 14, 22, 24) der Dose angeordnet sind, und dadurch, dass mindestens eine dieser zwei gegenüberliegenden Seitenwände (12, 14, 22, 24) eine Anzahl von Linien (17, 27) mit geringerem mechanischen Widerstand aufweist, die der Anzahl von Linien plus eins entspricht.

2. Dose (10, 20, 30) nach Anspruch 1, bei der sich die Linien (17, 27, 37) mit geringerem mechanischen Widerstand vom Boden (11, 21, 31) bis zum freien Rand der Seitenwand (14, 24, 25, 35) erstrecken.

3. Dose nach einem der Ansprüche 1 und 2, bei der die Linien (17, 27, 37) mit geringerem mechanischen Widerstand entlang der Seitenwand (14, 24, 25, 35) um eine vorbestimmte, regelmäßige Teilung beabstandet sind.

4. Dose (10, 20, 30) nach Anspruch 3, bei der diese Teilung 150 Millimeter ist.

5. Dose (10, 20, 30) nach einem der Ansprüche 1 bis 4, bei der mindestens eine flexible Lasche (42) vorgesehen ist, die in ihrer Längsseite eine Rille aufweist, welche sich dazu eignet, mit dem abgeschnittenen Rand des Bodens (11, 21, 31) der Dose (10, 20, 30) zusammenzuwirken, wobei diese flexible Lasche (42) eine der Abstandsteilung der Linien (17, 27, 37) mit geringerem mechanischen Widerstand entsprechende Länge aufweist.

6. Dose (10, 20, 30) nach einem der Ansprüche 1 bis 5, bei der mindestens ein profilierter, U-förmiger Reiter (40) vorgesehen ist, der den abgeschnittenen Rand der Seitenwand (14, 24, 25, 35) von zwei nebeneinander angeordneten Dosen (10, 20, 30) einspannen kann.

7. Dose (10, 20, 30) nach Anspruch 6, bei der Mittel zum Positionieren (43, 43) des Reiters (40) in Bezug zur Seitenwand (14, 24, 25, 35) vorgesehen sind, wobei diese Mittel zum Positionieren (43, 53) an der Innenseite der Seitenwand (14, 24, 25, 35) auf beiden Seiten jeder Linie (17, 27, 37) mit geringerem mechanischen Widerstand zwei Stützen (43) umfassen, die mit der Seitenwand (14, 24, 25, 35) zwei zueinander geöffnete Rillen bilden.

8. Dose (10, 20, 30) nach Anspruch 7, bei der diese Mittel zum Positionieren (43, 53) in einem entsprechenden Seitenflügel (51) des Reiters (40) eine Einkerbung (53) umfassen, in der das freie Ende einer dieser Stützen (43) aufgenommen werden kann.

9. Dose (10, 20, 30) nach einem der Ansprüche 7 und 8, in der im Boden (11, 21, 31) dieser Dose (10, 20, 30) in der Nähe jeder Stütze (43) eine Schraubführung (41) für eine Befestigungsschraube (44) dieses Reiters vorgesehen ist.

## Claims

1. A box (10, 20, 30) for electrical equipment, the box comprising a rear wall (11, 21, 31) and four side walls (12, 13, 14, 15, 22, 23, 24, 25, 32, 33, 34, 35) that extend perpendicularly from the rear wall (11, 21, 31), of which at least one side wall (14, 24, 25, 35) includes a plurality of lines of weakness (17; 27; 37) allowing the side wall (14, 24, 25, 35) to break along any two lines (17; 27; 37) from among the plurality of lines, and allowing removal of a removable portion (16, 26, 36) of said side wall (14, 24, 25, 35), situated between said two lines (17; 27; 37), said box being **characterized in that** it is adapted to house a number of rows of modular electrical equipment that is greater than or equal to two, said rows being arranged perpendicularly to two opposite side walls (12, 14, 22, 24) of said box, and **in that** at least one of the two opposite side walls (12, 14, 22, 24) includes a number of lines of weakness (17; 27) that is equal to said number of rows plus one.

2. A box (10, 20, 30) according to claim 1, wherein said lines of weakness (17; 27; 37) extend from the rear wall (11, 21, 31) to the free edge of said side wall (14, 24, 25, 35).

3. A box according to claim 1 or claim 2, wherein said lines of weakness (17; 27; 37) are spaced apart by a predetermined regular pitch along said side wall (14, 24, 25, 35).

4. A box (10, 20, 30) according to claim 3, wherein said pitch is equal to 150 mm.

5. A box (10, 20, 30) according to any one of claims 1 to 4, wherein at least one flexible strip (42) is provided that, in its longitudinal edge, includes a groove that is adapted to co-operate with the cut edge of the rear wall (11, 21, 31) of said box (10, 20, 30), the flexible strip (42) presenting a length that is equal to the pitch at which the lines of weakness (17; 27; 37) are spaced.

6. A box (10, 20, 30) according to any one of claims 1 to 5, wherein at least one clamp (40) is provided having a U-shaped profile that is adapted to clamp together the cut edges of said side walls (14, 24, 25, 35) of two boxes (10, 20, 30) placed side by side.

7. A box (10, 20, ,30) according to claim 6, wherein positioner means (43, 43) are provided for positioning said clamp (40) relative to said side walls (14, 24, 25, 35), said positioner means (43, 53) comprising, on the inside faces of said side walls (14, 24, 25, 35), arranged on either side of each line of weakness (17, 27, 37), two uprights (43) that co-operate with said side wall (14, 24, 25, 35) to form two grooves that are open towards each other.

8. A box (10, 20, 30) according to claim 7, wherein, in a corresponding side flange (51) of the clamp (40), said positioner means (43, 53) include a notch (53) that is adapted to house the free end of one of said uprights (43).

9. A box (10, 20, 30) according to claim 7 or claim 8, wherein, in the rear wall (11, 21, 31) of the box (10, 20, 30), in the proximity of each upright (43), a well (41) is provided for receiving a fastener screw (44) of said clamp.
